(19) Europäisches Patentamt
European Patent Office
Office européen des brevets

(11) **EP 4 131 701 A1**

(12) **EUROPEAN PATENT APPLICATION**
published in accordance with Art. 153(4) EPC

(43) Date of publication:
**08.02.2023 Bulletin 2023/06**

(21) Application number: **20926813.5**

(22) Date of filing: **26.03.2020**

(51) International Patent Classification (IPC):
**H02J 3/38** $^{(1968.09)}$         **H02J 3/46** $^{(1968.09)}$

(52) Cooperative Patent Classification (CPC):
**H02J 3/38; H02J 3/46**

(86) International application number:
**PCT/JP2020/013715**

(87) International publication number:
**WO 2021/192153 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hitachi, Ltd.**
**Tokyo 100-8280 (JP)**

(72) Inventors:
• **NAITO, Hiroto**
**Tokyo 100-8280 (JP)**

• **SHIRAKAWA, Yuzo**
**Tokyo 100-8280 (JP)**
• **HASEGAWA, Hiroaki**
**Tokyo 100-8280 (JP)**
• **ISHIKAWA, Takao**
**Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **THERMAL ENERGY MANAGEMENT SYSTEM**

(57) A heat energy management system of the present disclosure includes: a heat source device; a cogeneration system configured to supply both heat and power; a first heat utilization device and a heat exchanger which are connected to the heat source device by a heat conduit; a second heat utilization device connected to the cogeneration system by the heat conduit; a private power facility; an electric wire configured to connect the cogeneration system and the private power facility to a power system; and a control system configured to control the heat source device and the cogeneration system. The control system is configured to calculate at least one of an input fuel amount and an input power amount to the heat source device based on a heat demand in the first heat utilization device, supply heat from the heat source device to the first heat utilization device, and cause generated power of the cogeneration system to flow backward to the power system or supply the generated power to the private power facility.

[FIG. 1]

**Description**

Technical Field

The present invention relates to a heat energy management system.

Background Art

with the increasing introduction of fluctuating renewable energy such as solar power generation and wind power generation, it is expected that an adjustment load of a system will increase. Although thermal power generation is mainly responsible for a fluctuation adjustment of the load, it is considered that heat loss increases due to the fluctuation of the power generation efficiency corresponding to a load factor.

As a system that efficiently uses thermal energy and reduces heat loss, a steam turbine-thermal energy combined power generation system is adopted in places where waste heat is generated such as centralized power plants, and a thermoelectric supply device (cogeneration system) is used in individual distributed power generation. Such a power generation system and a thermoelectric supply device are typically in system interconnection with a power grid, and power supply and demand management are mainly performed. As described above, with respect to the thermal energy, in order to maintain the power load of the grid, a system of "operation following electric load" is designed so as to passively use an amount of power generated at the time of power generation.

As a supply and demand management system for heat, for example, there is a heat supply management and control system including a fuel cell system (for example, household Ene farm), an individual heat source management system (for example, a building alone, an accommodation facility alone), and an area and neighboring facility, but control in which rated operation of heat is performed or control in which only heat is taken into consideration is performed.

PTL 1 discloses that, in order to improve the overall efficiency of power generation efficiency and heat utilization efficiency in a thermoelectric supply system, "a control device 16 calculates an output of electric power when a fuel cell unit 10 generates power in an operation following thermal load mode when a power demand at a customer is less than a rated output of the fuel cell unit 10 in a fuel cell system 1, and controls the fuel cell unit. 10 so as to generate power in the operation following thermal load mode when the calculated output is larger than a heat demand of the customer" (see abstract of PTL 1).

Citation list

Patent Literature

PTL 1: JP-A-2018-121405

Summary of Invention

Technical Problem

However, the thermoelectric supply system of PTL 1 controls a fuel cell unit according to the power demand and the heat demand in one consumer, and no attention is focused on the control for improving thermal efficiency in a region (grid).

Therefore, the present disclosure provides a heat energy management system which operates following a thermal load to improve the thermal efficiency in a grid.

Solution to Problem

In order to solve the above problem, a heat energy management system of the present disclosure includes: a heat source device; a cogeneration system configured to supply both heat and power; a first heat utilization device and a heat exchanger which are connected to the heat source device by a heat conduit; a second heat utilization device connected to the cogeneration system by the heat conduit; a private power facility; an electric wire configured to connect the cogeneration system and the private power facility to a power system; and a control system configured to control the heat source device and the cogeneration system. The control system is configured to calculate at least one of an input fuel amount and an input power amount to the heat source device based on a heat demand in the first heat utilization device, supply heat from the heat source device to the first heat utilization device, and cause generated power of the cogeneration system to flow backward to the power system or supply the generated power to the private power facility.

More features relevant to the present disclosure will become apparent from a description of the description and the accompanying drawings. Aspects of the present disclosure may be achieved and implemented by means of the elements and combinations of various elements and the following detailed description and accompanying claims.

The description in this description is merely exemplary, and is not intended to limit the scope of the claims or application of the present disclosure in any way whatsoever.

Advantageous Effect

According to the heat energy management system of the present disclosure, it is possible to improve the thermal efficiency in a grid.

Problems, configurations, and effects other than those described above will be apparent from the following description of embodiments.

Brief Description of Drawings

[FIG. 1] FIG. 1 is a diagram showing a configuration of a heat energy management system according to a first embodiment.
[FIG. 2] FIG. 2 is a functional block diagram of a control system according to the first embodiment.
[FIG. 3] FIG. 3 is a diagram showing a configuration of a cogeneration system.
[FIG. 4] FIG. 4 is a diagram showing a configuration of a heat energy management system according to a second embodiment.
[FIG. 5] FIG. 5 is a functional block diagram of a control system according to the second embodiment.
[FIG. 6] FIG. 6 is a graph obtained by simulating demand power and supply power.

Description of Embodiments

Hereinafter, embodiments of the present disclosure will be described with reference to the drawings. The embodiments are examples for describing the present disclosure, and omissions and simplifications are appropriately made to clarify the description. The present disclosure can be performed in various other forms. Unless otherwise limited, each component may be singular or plural.

When there are a plurality of components having the same or similar functions, different subscripts may be attached to the same reference numeral. In addition, when it is not necessary to distinguish the plurality of components from one another, a description will be given while omitting the subscript.

In the embodiments, processing performed by executing a program may be described. Here, a computer executes the program by a processor (for example, a CPU or a GPU), and performs the processing, that is defined by the program, using a storage resource (for example, a memory), an interface device (for example, a communication port), or the like. Therefore, a subject of the processing performed by executing the program may be the processor. Similarly, the subject of the processing performed by executing the program may be a controller, a device, a system, the computer, or a node including the processor. The subject of the processing performed by executing the program may be a calculation unit, and may include a dedicated circuit that performs specific processing. Here, the dedicated circuit is, for example, a field programmable gate array (FPGA), an application specific integrated circuit (ASIC), a complex programmable logic device (CPLD), or the like.

The program may be installed on the computer from a program source. The program source may be, for example, a program distribution server or a computer-readable storage medium. When the program source is the program distribution server, the program distribution server may include the processor and the storage resource that stores a program to be distributed, and the processor of the program distribution server may distribute the program to be distributed to another computer. In addition, in the embodiments, two or more programs may be implemented as one program, or one program may be implemented as two or more programs.

[First Embodiment]

<Configuration Example of Heat Energy Management System>

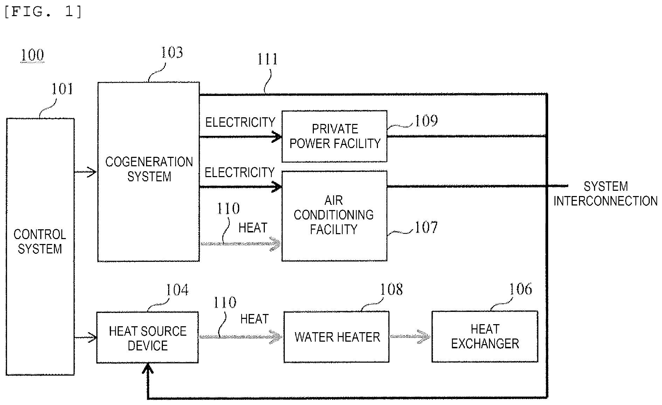

FIG. 1 is a diagram showing a configuration of a heat energy management system according to a first embodiment. As shown in FIG. 1, the heat energy management system 100 includes a control system 101, a cogeneration system 103, a heat source device 104, a heat exchanger 106, an ait conditioning facility 107 (a second heat utilization device), a water heater 108 (a first heat utilization device), and a private power facility 109. In FIG. 1, light-colored thick wires indicate heat conduits 110, and dark-colored thick wires indicate electric wires 111. A thin line arrow indicates a command value from the control system 101.

The cogeneration system 103 and the air conditioning facility 107 are connected by the heat conduits 110. The heat source device 104, the heat exchanger 106, and the water heater 108 are connected by the heat conduits 110.

The cogeneration system 103 is a system capable of supplying both heat and power, and includes a fuel supply mechanism such as a fuel tank or a gas pipe, a power generator, and a heat recovery device (not shown in FIG. 1). Examples of the power generator include a fuel cell, a known engine generator using a diesel engine, a spark-ignition engine, or the like. As fuel of the cogeneration system 103, for example, renewable energy (for example, hydrogen), natural gas, petroleum, biomass, and the like are used depending on the power generator.

The cogeneration system 103 supplies the generated power of the power generator to the air conditioning facility 107, and if there is surplus power, the cogeneration system 103 causes the generated power to flow backward to a system or supplies the surplus power to the private power facility 109. The heat recovery device is, for example, a heat exchanger, and recovers the heat of the power generator and supplies the heat to the air conditioning facility 107 by a heat medium in the heat conduits 110.

The heat source device 104 is, for example, a boiler, a burner, a refrigerator, a heat pump, or the like, and supplies heat to the heat utilization devices such as the water heater 108 through the heat conduits 110 in a form of hot heat and cold heat (heat medium: hot water, steam, cold water, or cold air). The heat source device 104 is configured to be supplied with fuel from the fuel supply mechanism such as the fuel tank or the gas pipe. The heat source device 104 is configured to be supplied with power from the power system.

Normally, the power supplied to the heat source device 104 can be provided from the power system, but when a power demand is large, the generated power of the cogeneration system 103 can be supplied to the heat source device 104 via the power system.

Although only one heat source device 104 is shown in FIG. 1, a plurality of different types of heat source devices 104 may be connected to a plurality of types of heat utilization devices by the heat conduits 110. Examples of the heat source device 104 include a device that requires fuel as a heat source, a device that requires power as a heat source, and a device that requires fuel and power as a heat source. An input fuel amount and an input power amount of the heat source device 104 are controlled by the control system 101 according to the heat source.

The air conditioning facility 107 and the private power facility 109 are connected to the cogeneration system 103 and the power system by electric wires 111, and can be supplied with power from the cogeneration system 103 and the power system.

The heat conduits 110 and the electric wires 111 may be separately provided as shown in FIG. 1, or may be integrated into one pipe.

The control system 101 calculates an input fuel amount to the cogeneration system 103 according to a heat demand of the air conditioning facility 107, and outputs the calculated amount of fuel to the cogeneration system 103. The control system 101 calculates an input fuel amount to the heat source device 104 according to the heat demand of the water heater 108, and when the heat source device 104 requires power, the control system 101 calculates an input power amount to the heat source device 104 and outputs the calculated amount of power to the heat source device 104. The heat source device 104 receives power from the system according to the input power amount, or receives power generated by the cogeneration system 103 via the system.

The details of the control system 101 calculating the input fuel amount and the input power amount to the cogeneration system 103 and the heat source device 104 will be described later.

Although only one cogeneration system 103 is shown in FIG. 1, the heat energy management system 100 may include a plurality of types of cogeneration systems 103. Although an example in which the heat from the cogeneration system 103 is supplied to the air conditioning facility 107 and the heat from the heat source device 104 is supplied to the water heater 108 is shown, types of heat utilization devices to which the cogeneration system 103 and the heat source device 104 supply heat are not limited thereto. A plurality of heat utilization devices may be connected to one cogeneration system 103, and a plurality of heat utilization devices may be connected to one heat source device 104.

<Configuration Example of Control System>

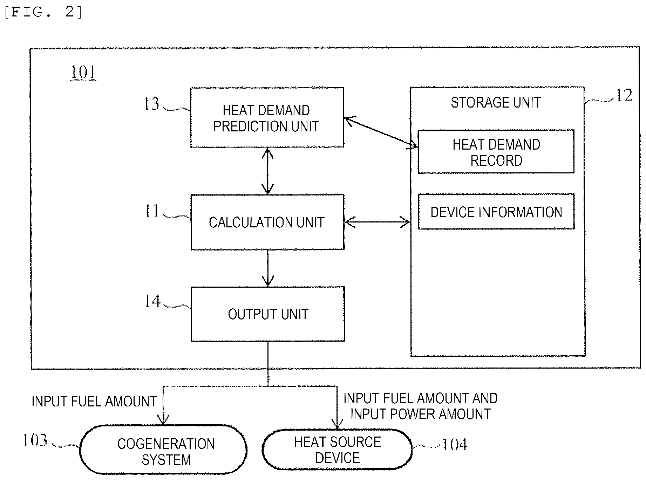

FIG. 2 is a functional block diagram of the control system 101 according to the first embodiment. As shown in FIG. 2, the control system 101 includes a calculation unit 11, a storage unit 12, a heat demand prediction unit 13, and an output unit 14.

The storage unit 12 stores data related to the heat demand (record) of the heat utilization devices and data (device information) related to the cogeneration system 103 and the heat source devices 104. The data related to the heat demand is, for example, record data of the heat demand in the past, and the record data can be calculated based on, for example, a measured value of a flow rate of a heat medium to the heat utilization device and efficiency of the heat source device 104.

As a hardware configuration of the storage unit 12, for example, a memory such as a RAM, a storage device such as a hard disk drive or a solid state drive, a server device including a database, or the like can be used, and there is no particular limitation as long as data can be stored in a manner of being readable by the calculation unit 11 and the heat demand prediction unit 13.

The heat demand prediction unit 13 reads the data related to the heat demand of the heat utilization device from the storage unit 12, and calculates a predicted value of the heat demand based on the data related to the heat demand. The predicted value of the heat demand can be a heat demand of the same time on the same day of the last year, for example, by using the record data of the heat demand of the past one year. Statistical data such as an average value, a median value may be used as the predicted value of the heat demand by using the record data of the heat demand for a plurality of years. The predicted value of the heat demand may be acquired by mechanically learning the record data of the heat demand. In the calculation of the predicted value of the heat demand, it is also possible to predict the supply and demand according to an event that can increase the heat demand and the power demand. When new equipment (a heat utilization device) is introduced in the grid of the heat energy management system 100, a heat demand of the new equipment may also be taken into consideration.

The calculation unit 11 acquires the predicted value of the heat demand from the heat demand prediction unit 13, and calculates the input fuel amount and the input power amount to the heat source device 104 and the input fuel amount to the cogeneration system 103. The calculation unit 11 and the heat demand prediction unit 13 can be implemented by a processor such as a CPU, MPU, or GPU.

The input fuel amount ($m^3$) can be calculated by the following equation (1) based on a predicted value (MJ) of the heat demand, a heat generation amount ($MJ/m^3$) of the fuel necessary for the heat source device 104, and conversion efficiency (%) of the heat source device 104.

[Equation 1]

$$\text{fuel amount (m3)} = \frac{\text{heat demand (MJ)}}{\text{heat generation amount }\left(\frac{MJ}{m3}\right)\text{of fuel}\times\text{conversion efficiency (\%) of heat source device}} \quad (1)$$

The input power amount (kW) can be calculated by the following equation (2) based on a predicted value (kW) of the heat demand and a coefficient of record of the heat source device 104.

[Equation 2]

$$\text{power amount (kW)} = \frac{\text{heat demand (MJ)}}{\text{coefficient of record of the heat source device (--)}} \quad (2)$$

The output unit 14 transmits, as command values, the input fuel amount and the input power amount calculated by the calculation unit 11 to the cogeneration system 103 and the heat source device 104. The cogeneration system 103 generates heat by using fuel according to the command value of the amount of fuel, and supplies the heat to the heat utilization device (for example, the air conditioning facility 107). The cogeneration system 103 can supply the generated power obtained with the production of heat to the heat utilization device (for example, the air conditioning facility 107) when the heat utilization device uses the power. When there is a surplus in the generated power of the cogeneration system 103, it is possible to cause the power to flow backward to the system or to supply the power to the private power facility 109. The power flowing backward to the system from the cogeneration system 103 can also be supplied to the heat source device 104.

The heat source device 104 produces heat using the fuel and the power according to the command value of the amount of fuel and the command value of the amount of power, and supplies the heat to the heat utilization device (for example, the water heater 108) through the heat medium passing through the heat-conduit 110.

<Method for Controlling Thermoelectric Ratio of Cogeneration system>

The control system 101 may be configured to control a thermoelectric ratio, which is a ratio of a heat output to a power output of the cogeneration system 103, according to a ratio of the heat demand to the power demand of the heat utilization device. Similar to the above-mentioned heat demand, the power demand can be, for example, record data of the past power demand stored in the storage unit 12 (not shown in FIG. 2).

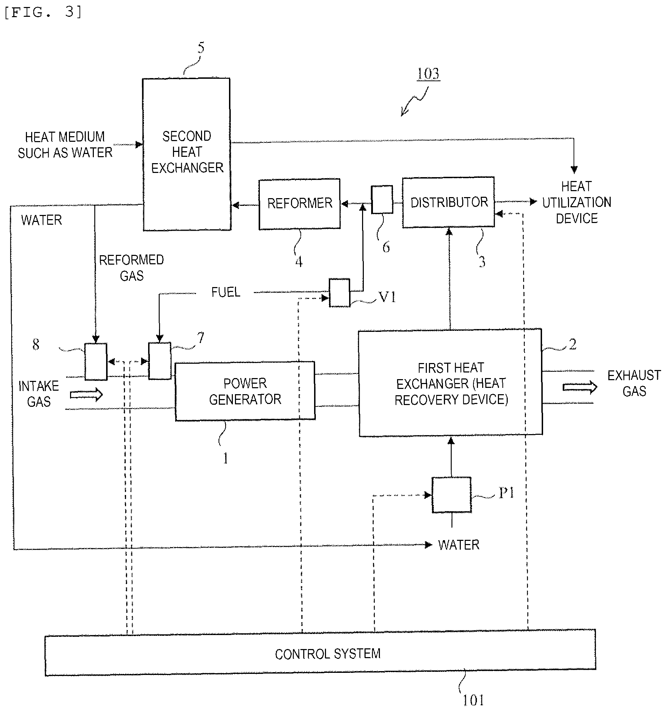

FIG. 3 is a diagram showing a configuration of the cogeneration system 103. As shown in FIG. 3, in a case where the thermoelectric ratio can be controlled, the cogeneration system 103 includes a power generator 1, a first heat exchanger 2 (heat recovery device) that performs heat exchange with exhaust heat from the power generator 1 as high-temperature steam (heat medium), a reformer 4 that reforms fuel using high-temperature steam, and a distributor 3 that distributes the high-temperature steam from the first heat exchanger 2 to one or both of the heat utilization device and the reformer. A pressure reducer 6 (pressure reducing valve) is provided between the distributor 3 and the reformer 4.

Water is supplied to the first heat exchanger 2 via a water flow rate control device P1. Fuel is supplied to the reformer 4 from a fuel supply device 7 via a fuel flow rate control device V1, and the high-temperature steam is supplied from the distributor 3. The water flow rate control device P1 and the fuel flow rate controldevice V1 are controlled by signals from the control system 101.

The reformer 4 includes a catalyst for reforming the fuel inside thereof, and obtains reformed gas by steam reforming the fuel. For example, when the fuel is methane, a reaction formula of the steam reforming is as follows.

$$CH4 + 2H_2O = 4H_2 + CO_2 - 165 \text{ kJ}$$

Thus, the steam reforming of the fuel in the reformer 4 is an endothermic reaction. A part of the high-temperature steam is used as a heat source of the endothermic reaction. The reformed gas obtained by the reformer is supplied as fuel to the power generator 1 via a reformed gas supply device 8. Therefore, a part of the heat contained in the exhaust gas of the power generator 1 can be recovered as a heating amount of the fuel of the power generator 1.

Accordingly, a part of the exhaust heat of the power generator l can be recovered as fuel heat amount instead of being supplied to the heat utilization device, the power generation output is increased with respect to a unit fuel heat supplied to the cogeneration system 103, and the power generation efficiency is increased.

Therefore, a power ratio in the cogeneration system 103 can be increased by controlling the high-temperature steam by the distributor 3. That is, when all steam is distributed to the heat utilization device by the control of the distributor 3, the thermoelectric ratio is maximum in the cogeneration system 103, and when all steam is distributed to the reformer 4, the thermoelectric ratio is minimum.

The overall efficiency of the cogeneration system 103 can be improved by controlling the thermoelectric ratio by controlling how much the exhaust heat of the power generator 1 is recovered as the reformed gas (fuel) according to the ratio of the heat demand to the power demand of the heat utilization device. Since the chemically recovered fuel is input to the power generator, the fuel input to the power generator 1 can be reduced.

<Technical Effects>

As described above, the heat energy management system 100 according to the first embodiment calculates at least one of the amount of fuel and the amount of power to be input to the heat source device 104 according to the heat demand of the heat utilization device (the water heater 108), and the heat source device 104 supplies the heat to the heat utilization device according to the calculated amount of fuel and the calculated amount of power. Thus, by controlling the heat supply to the heat utilization device in the operation following thermal load mode in which heat is mainly controlled, excessive heat does not occur, the thermal efficiency in the grid (area) of the thermal energy management system 100 can be improved. As a result, the primary energy can be reduced, and energy security can be secured and greenhouse gases can be reduced.

The heat energy management system 100 calculates the amount of fuel to be input to the cogeneration system 103 according to the heat demand of the heat utilization device (the air conditioning facility 107), and the cogeneration system 103 supplies the heat to the heat utilization device according to the calculated amount of fuel. The generated power of the cogeneration system 103 is supplied to the heat utilization device, and the surplus power can flow backward to the system or can be supplied to the private power facility. Accordingly, the overall efficiency of heat and electric power of the thermal energy management system 100 can be improved.

[Second Embodiment]

In the first embodiment described above, a heat energy management system is described in which the input fuel amount and the input power amount to the heat source device are controlled according to the predicted value of the heat demand of the heat utilization device. Since the heat is produced according to the heat demand and the power is secondarily obtained, a fluctuation occurs in the power to be obtained, such as renewable energy.

To alleviate an increase in a fluctuation adjustment load of the renewable energy, it is desired to improve the power generation efficiency of thermal power generation and reduce heat loss by making the output power of the system including renewable energy constant and thereby making the power to be adjusted by thermal power generation constant.

As a representative cogeneration system, a fuel cell using hydrogen as fuel has been widely used, and the use of hydrogen as renewable energy has been expanding, and therefore, it is desirable to control supply and demand management of the hydrogen. Therefore, in a second embodiment, a technique for controlling the production of hydrogen and the storage of energy is proposed in consideration of fluctuating power of the renewable energy.

<Configuration Example of Heat Energy Management System>

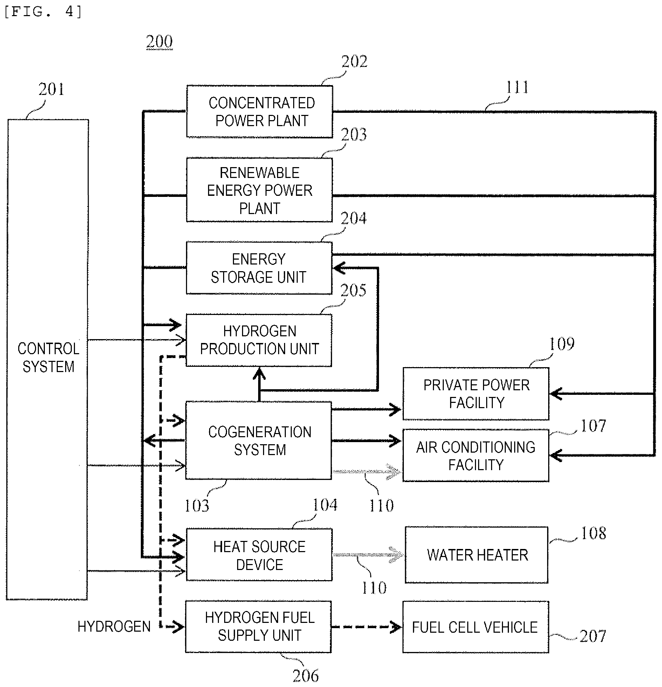

FIG. 4 is a diagram showing a configuration of a heat energy management system 200 according to the second embodiment. As shown in FIG. 4, the heat energy management system 200 further includes a centralized power plant 202, a renewable energy power plant 203, an energy storage unit 204, a hydrogen production unit 205, a hydrogen fuel supply unit 206, and a fuel cell vehicle 207 (moving body), in addition to the same configuration as that of the heat energy management system 100 (FIG. 1) according to the first embodiment. In FIG. 4, light-colored thick wires indicate heat conduits 110, dark-colored thick wires indicate electric wires 111, and dashed lines indicate a hydrogen supply network. A thin line arrow indicates the command value from a control system 201.

The centralized power plant 202 includes, for example, a thermal power plant or a nuclear power plant. The renewable energy power plant 203 includes, for example, a wind power plant, a solar power plant, or a geothermal power plant. The energy storage unit 204 includes, for example, a storage battery, a pumped storage power plant, a charging station of an electric vehicle (EV), and stores energy in a form of power, positional energy, or the like, and discharges the energy as necessary.

The hydrogen production unit 205 is, for example, an electrolysis device or a hydrogen production plant, and is responsible for production and storage of hydrogen. The hydrogen produced by the hydrogen production unit 205 can be supplied to the cogeneration system 103, the heat source device 104, and the hydrogen fuel supply unit 206.

In the present embodiment, the cogeneration system 103 can also supply power to the energy storage unit 204 and the hydrogen production unit 205.

The hydrogen fuel supply unit 206 is, for example, a hydrogen station, and supplies hydrogen as fuel to the fuel cell vehicle (FCV) 207.

In the present embodiment, the control system 201 further controls an energy storage amount or an energy discharge amount of the energy storage unit 204, a hydrogen production amount of the hydrogen production unit 205, a hydrogen supply amount to the hydrogen fuel supply unit 206, a supply destination of power generated by the cogeneration system 103, and the thermoelectric ratio of the cogeneration system 103 based on the heat demand, the power demand of the heat utilization device, and a shipping plan of a mobile fuel. The details of the control performed by the control system 201 will be described later.

<Configuration Example of Control System>

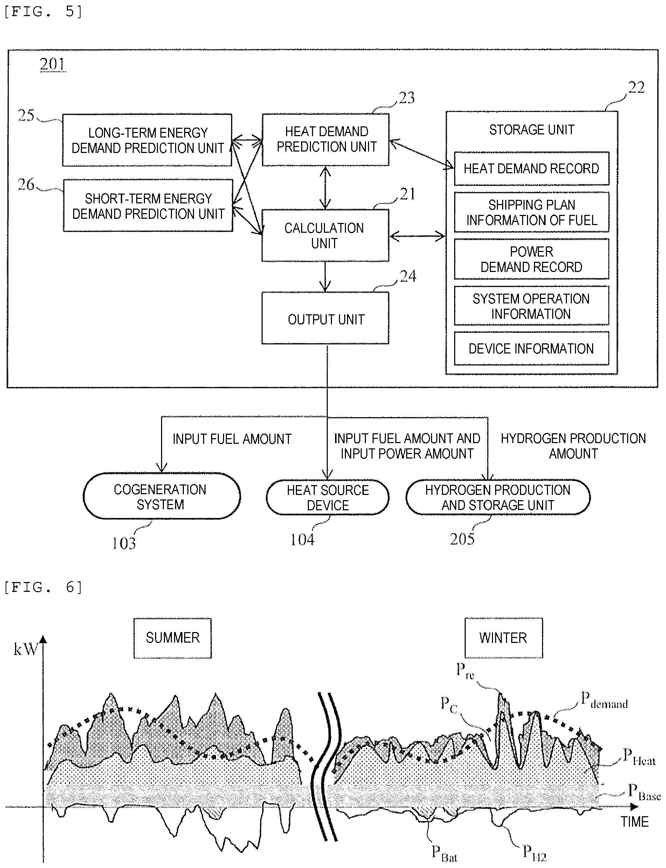

FIG. 5 is a functional block diagram of the control system 201 according to the second embodiment. As shown in FIG. 5, the control system 201 is different from the first embodiment in that the control system 201 further includes a long-term energy demand prediction unit 25 and a short-term energy demand prediction unit 26. The storage unit 22 stores data (heat demand record) related to the heat demand of -the heat utilization device, information (device information) related to the cogeneration system 103, the heat source device 104, and the hydrogen production unit, shipping plan information of the mobile fuel, data (power demand record) related to the power demand, and system operation information.

The system operation information is, for example, a power generation status and a power consumption status of the centralized power plant 202, a power generation status and a power consumption status of the renewable energy power plant 203, and a power storage amount of the energy storage unit 204.

The shipping plan information of the mobile fuel is, for example, a remaining amount of hydrogen in the hydrogen fuel supply unit 206, a remaining amount of charge in the charging station of the electric vehicle (mobile body), and the like.

The long-term energy demand prediction unit 25 and the short-term energy demand prediction unit 26 predict long-term and short-term energy demands (energy distribution) respectively, based on data such as record data of the heat demand, record data of the power demand, and record data of a fuel shipment.

The calculation unit 21 reads the various types of data stored in the storage unit 22, or acquires the distribution of the energy demand predicted by the long-term energy -demand prediction unit 25 and the short-term energy demand prediction unit 26, and determines the energy storage amount or the energy discharge amount of the energy storage unit 204, the hydrogen production amount of the hydrogen production unit 205, the hydrogen supply amount to the hydrogen fuel supply unit 206, the supply destination of the power generated by the cogeneration system 103, and the thermoelectric ratio of the cogeneration system 103. An outline of these controls will be described below.

FIG. 6 is a graph obtained by simulating demand power and supply power in summer and winter in a certain year: This simulation (power supply and demand prediction) can be executed by, for example, the long-term energy demand prediction unit 25 and the short-term energy demand prediction unit 26 shown in FIG. 5. In FIG. 6, a horizontal axis represents time, and a vertical axis represents kW.

The demand power $P_{demand}$ and the supply power $P_{suppley}$ are controlled to match each other at the same time, and the power system is maintained. Since the demand power $P_{demand}$ always fluctuates due to convenience of industrial power and customers such as general households, it is difficult to control or adjust the demand power $P_{demand}$. Therefore, it is necessary to perform supply and demand adjustment by adjusting the supply power $P_{supply}$. As shown in FIG. 6, the supply power $P_{supply}$ includes base power $P_{base}$, fluctuating power $P_{re}$, operation following thermal load power $P_{heat}$, adjustment power $P_C$, stored power $P_{bat\_charge}$, and hydrogen production power $P_{H2}$.

The base power $P_{base}$ is power which is derived from, for example, nuclear power generation and thermal power generation (centralized power plant 202) and which is responsible for stable output. The fluctuating power $P_{re}$ is power derived from renewable energy (renewable energy power plant 203). The operation following thermal load power $P_{heat}$ is power generated by controlling the cogeneration system 103 according to the heat demand as described in the first embodiment. The adjustment power $P_C$ is, for example, supply power and demand power adjustment power derived from thermal power generation. The stored power $P_{bat\_charge}$ is charge and discharge power of the pumped storage power generation or the storage battery (energy storage unit 204) for power charging and discharging. The hydrogen production power $P_{H2}$ is power used by the hydrogen production unit 205 as a surplus power utilization device.

When the relationship between the demand power $P_{demand}$ and the supply power $P_{supply}$ is expressed, the following Equation (3) is obtained.

[Equation 3]

$$\text{Pdemand} = \text{Psupply} = (\text{Pre} + \text{Pheat} + \text{Pc} + \text{Pbase}) - \text{PH2} - \text{Pbat\_charge} \quad (3)$$

Here, when the power supply and demand prediction is the supply power $P_{supply}$ > the demand power $P_{demand}$, the supply and demand balance of power can be adjusted by converting $\Delta P = P_{supply} - P_{demand}$ into at least one of the stored power $P_{bat\_charge}$ or the hydrogen production power $P_{H2}$.

Since the operation following thermal load power $P_{heat}$ is power generated using fuel containing fossil fuel by the cogeneration system 103, the generated power can be used as electricity without being converted into to heat, so that an environmental load is reduced. Therefore, the operation following thermal load power $P_{heat}$ can be used for the power demand of the stored power $P_{bat\_charge}$ (the storage battery, the pumped storage power generation pumping, the charging station of the electric vehicle, or the like), or the power demand of the customer.

An adjustment load of the adjustment power $P_C$ for adjusting the fluctuating power $P_{re}$ can be reduced by using the fluctuating power $P_{re}$ of renewable energy for the hydrogen production power $P_{H2}$.

In other words, the calculation unit 21 calculates the power storage amount (energy storage amount) of the power storage power $P_{bat\_charge}$ or a hydrogen production amount of hydrogen produced by using the hydrogen production power $P_{H2}$, and outputs the calculated amounts as control values from the output unit 24 to the cogeneration system 103 and the hydrogen production unit 205, respectively. The cogeneration system 103 supplies the generated power to the energy storage unit 204 according to the power storage amount, or causes the generated power to flow backward to the system. The hydrogen production unit 205 receives the supply of the fluctuating power $P_{re}$ of renewable energy as the hydrogen production power $P_{H2}$, and produces and stores hydrogen according to the hydrogen production amount.

When the power supply and demand prediction is the supply power $P_{supply}$ < the demand power $P_{demand}$, a control can be controlled such that power is supplied from the stored power $P_{bat\_charge}$, the hydrogen produced and stored in the hydrogen production unit 205 is supplied to the cogeneration system 103, the heat source device 104, or the hydrogen fuel supply unit 206, or the power generation ratio (the thermoelectric ratio is reduced) of the cogeneration system 103 is increased to increase the operation following thermal load power $P_{heat}$. At this time, the generated power of the cogeneration system 103 (the operation following thermal load power $P_{heat}$) can be supplied to the heat source device 104 via the system.

In other words, the calculation unit 21 calculates a power supply amount according to each of the power demand of the air conditioning facility 107, the power demand of the private power facility 109, and the power demand of the heat source device 104, and supplies the power from the stored power $P_{bat\_charge}$. The calculation unit 21 calculates the thermoelectric ratio of the cogeneration system 103 according to the power demand of the air conditioning facility 107, the power demand of the private power facility 109, and the power demand of the heat source device 104 to improve a power generation amount. The calculation unit 21 determines the distribution (hydrogen supply amount) of the supply destinations of the hydrogen according to the demands of the cogeneration system 103, the heat source device 104, and the hydrogen fuel supply unit 206 (the heat demand of the air conditioning facility 107, the heat demand of the water heater 108, and the fuel demand of the fuel cell vehicle 207).

When a large-scale power shortage occurs, for example, the power supply of the megawatt order can be provided by the power of the system.

<Technical Effects>

As described above, in the heat energy management system 200 according to the second embodiment, the input fuel amount and the input power amount to the heat source device 104 are controlled based on the heat demand, and the supply destination of the fluctuating power of the renewable energy, the supply destination of the power generated by the cogeneration system 103, the thermoelectric ratio of the cogeneration system 103, the production amount or the supply amount of hydrogen are determined based on the heat demand, the power demand, the system operation information, and the shipping plan of the mobile fuel. In this way, by making the power supply and demand balance of the power in the heat energy management system 200 constant, the overall efficiency can be improved. By using the power of renewable energy to produce hydrogen, the fluctuation of the load of the fluctuation adjustment power mainly based on the thermal power generation can be alleviated, and the heat loss due to the fluctuation of the adjustment load can be reduced.

[Modification]

The present disclosure is not limited to the above-described embodiments, and includes various modifications. For example, the above-described embodiments have been described in detail for easy understanding of the present disclosure, and it is not necessary to include a1l the configurations described above. A part of the configurations of one embodiment can be replaced with a configuration of another configuration. The configuration of another embodiment may be added to the configuration of one embodiment. Further, a part of the configuration of another embodiment may be added to, deleted from, or replaced with a part of the configuration of each embodiment.

Reference Sign List

| 100, 200 | heat energy management system |
| 101, 201 | control system |
| 103 | cogeneration system |
| 104 | heat source device |
| 106 | heat exchanger |
| 107 | air conditioning facility |
| 108 | water heater |
| 109 | private power facility |
| 110 | heat conduit |
| 111 | electric wire |
| 202 | centralized power plant |
| 203 | renewable energy power plant |
| 204 | energy storage unit |
| 205 | hydrogen production unit |
| 206 | hydrogen fuel supply unit |
| 207 | fuel cell vehicle |

**Claims**

1. A heat energy management system, comprising:

   a heat source device;
   a cogeneration system configured to supply both heat and power;
   a first heat utilization device and a heat exchanger which are connected to the heat source device by a heat conduit;
   a second heat utilization device connected to the cogeneration system by the heat conduit;
   a private power facility;
   an electric wire configured to connect the cogeneration system and the private power facility to a power system;

and
a control system configured to control the heat source device and the cogeneration system, wherein
the control system is configured to:

calculate at least one of an input fuel amount and an input power amount to the heat source device based on a heat demand in the first heat utilization device, and supply heat from the heat source device to the first heat utilization device, and
cause generated power of the cogeneration system to flow backward to the power system or supply the generated power to the private power facility.

2. The heat energy management system according to claim 1, wherein
the control system is configured to control a thermoelectric ratio of the cogeneration system based on the heat demand and power demand.

3. The heat energy management system according to claim 1, further comprising:

a hydrogen production unit; and
an energy storage unit, wherein
the control system is configured to control a hydrogen production amount or a hydrogen supply amount of the hydrogen production unit or an energy storage amount or an energy discharge amount of the energy storage unit based on the heat demand, the power demand, and a shipping plan of a mobile fuel.

4. The heat energy management system according to claim 3, wherein
the control system is configured to:

when the generated power of the cogeneration system is larger than the power demand, supply the generated power to at least one of the energy storage unit, the hydrogen production unit, and the private power facility; and
when the generated power of the cogeneration system is less than the power demand, provide power from the energy storage unit, lower a thermoelectric ratio of the cogeneration system, and improve a power generation ratio.

5. The heat energy management system according to claim 1, wherein
the control system is further configured to calculate the input fuel amount to the cogeneration system based on a heat demand in the second heat utilization device, and supply heat from the cogeneration system to the second heat utilization device.

6. The heat energy management system according to claim 1, wherein
the control system is configured to calculate a predicted value of the heat demand based on record data of the heat demand, and calculate at least one of the input fuel amount and the input power amount to the heat source device based on the predicted value of the heat demand.

7. The heat energy management system according to claim 2, wherein
the cogeneration system includes:

a power generator,
a heat recovery device configured to recover heat from the power generator to a heat medium,
a reformer configured to reform fuel to be supplied to the cogeneration system, and
a distributor configured to distribute the heat medium from the heat recovery device to the second heat utilization device and the reformer, wherein

the control system is configured to control, based on the heat demand and the power demand, an amount of the heat medium to be supplied to the heat recovery device, a distribution ratio determined by the distributor, and an amount of the fuel to be supplied to the reformer.

[FIG. 1]

EP 4 131 701 A1

[FIG. 2]

12

[FIG. 3]

[FIG. 4]

[FIG. 5]

[FIG. 6]

**INTERNATIONAL SEARCH REPORT**

| International application No. |
|---|
| PCT/JP2020/013715 |

A. CLASSIFICATION OF SUBJECT MATTER
H02J 3/38(2006.01)i; H02J 3/46(2006.01)i
FI: H02J3/38 110; H02J3/46

According to International Patent Classification (IPC) or to both national classification and IPC

B. FIELDS SEARCHED

Minimum documentation searched (classification system followed by classification symbols)
H02J3/38; H02J3/46

Documentation searched other than minimum documentation to the extent that such documents are included in the fields searched
    Published examined utility model applications of Japan     1922–1996
    Published unexamined utility model applications of Japan   1971–2020
    Registered utility model specifications of Japan           1996–2020
    Published registered utility model applications of Japan   1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2014-174769 A (TOSHIBA CORP.) 22 September 2014 (2014-09-22) paragraphs [0014]-[0131], fig. 1-8 | 1-6<br>7 |
| Y | JP 2017-535241 A (YANMAR CO., LTD.) 24 November 2017 (2017-11-24) paragraphs [0040], [0049], fig. 3 | 1-6 |
| Y | JP 2019-54626 A (TOSHIBA CORP.) 04 April 2019 (2019-04-04) paragraphs [0013]-[0043], fig. 1 | 3-4 |

☐ Further documents are listed in the continuation of Box C.     ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 03 June 2020 (03.06.2020) | 16 June 2020 (16.06.2020) |

| Name and mailing address of the ISA/<br>    Japan Patent Office<br>    3-4-3, Kasumigaseki, Chiyoda-ku,<br>    Tokyo 100-8915, Japan | Authorized officer |
|---|---|
| | Telephone No. |

Form PCT/ISA/210 (second sheet) (January 2015)

INTERNATIONAL SEARCH REPORT
Information on patent family members

International application No.

PCT/JP2020/013715

| Patent Documents referred in the Report | Publication Date | Patent Family | Publication Date |
|---|---|---|---|
| JP 2014-174769 A | 22 Sep. 2014 | (Family: none) | |
| JP 2017-535241 A | 24 Nov. 2017 | US 2018/0322591 A1 paragraphs [0067], [0076], fig. 3 WO 2016/071930 A1 | |
| JP 2019-54626 A | 04 Apr. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018121405 A